(19) **Europäisches Patentamt**
**European Patent Office**
**Office européen des brevets**

(11) **EP 1 638 084 B1**

(12) **EUROPEAN PATENT SPECIFICATION**

(45) Date of publication and mention
of the grant of the patent:
**11.11.2009 Bulletin 2009/46**

(51) Int Cl.:
**G10L 21/02** (2006.01)

(21) Application number: **05107921.8**

(22) Date of filing: **30.08.2005**

(54) **Method and apparatus for multi-sensory speech enhancement**

Verfahren und Vorrichtung zur Sprachverbesserung mit mehreren Sensoren

Méthode et dispositif multisensoriel d'amélioration de la parole

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.09.2004 US 944235**

(43) Date of publication of application:
**22.03.2006 Bulletin 2006/12**

(73) Proprietor: **MICROSOFT CORPORATION**
**Redmond, Washington 98052-6399 (US)**

(72) Inventors:
• **Acero, Alejandro**
**Redmond, WA 98052 (US)**
• **Droppo, James G.**
**Redmond, WA 98052 (US)**
• **Huang, Xuedong David**
**Redmond, WA 98052 (US)**
• **Zhang, Zhengyou**
**Redmond, WA 98052 (US)**
• **Liu, Zicheng**
**Redmond, WA 98052 (US)**

(74) Representative: **Grünecker, Kinkeldey, Stockmair & Schwanhäusser Anwaltssozietät Leopoldstrasse 4 80802 München (DE)**

(56) References cited:
**WO-A-02/098169**

• **YANLI ZHENG ET AL: "Air- and bone-conductive integrated microphones for robust speech detection and enhancement" AUTOMATIC SPEECH RECOGNITION AND UNDERSTANDING, 2003. ASRU '03. 2003 IEEE WORKSHOP ON ST. THOMAS, VI, USA NOV. 30-DEC. 3, 2003, PISCATAWAY, NJ, USA,IEEE, 30 November 2003 (2003-11-30), pages 249-254, XP010713318 ISBN: 0-7803-7980-2**
• **GRACIARENA M ET AL: "Combining standard and throat microphones for robust speech recognition" IEEE SIGNAL PROCESSING LETTERS IEEE USA, vol. 10, no. 3, March 2003 (2003-03), pages 72-74, XP002357804 ISSN: 1070-9908**

## Description

BACKGROUND OF THE INVENTION

The present invention relates to noise reduction. In particular, the present invention relates to removing noise from speech signals.

A common problem in speech recognition and speech transmission is the corruption of the speech signal by additive noise. In particular, corruption due to the speech of another speaker has proven to be difficult to defect and/or correct.

WO 02/098169 A1 discusses detecting voiced and unvoiced speech using both acoustic and nonacoustic sensors. The systems receive acoustic signals at two microphones and generate difference parameters between the acoustic signals received at each of the two microphones. The systems identify information of the acoustic signals as unvoiced speech when the difference parameters exceed a first threshold and identify information of the acoustic signals a voiced speech when the difference parameters exceed a second threshold.

The document "Air- and Bone-Conductive Integrated Microphones for Robust Speech Detection and Enhancement" by Yanli Zheng et al. (Automatic Speech Recognition and Understanding, 2003. ASRU '03. 2003 IEEE Workshop on St. Thomas, VI, USA Nov. 30 - Dec. 30, 2003, Piscataway, NJ, USA, IEEE, 30 November 2003, pages 249 - 254) proposes a hardware device that combines regular microphone (air-conductive microphone) with a bone-conductive microphone. Compared to the regular microphone, the bone-conductive microphone is insensitive to ambient noise but it only captures the low frequency portion of the speech signal. By combining the two channels from the air- and bone-conductive microphone, the authors are able to significantly remove background speech even when the background speaker speaks at the same time as the speaker wearing the headset.

Recently, a system has been developed that attempts to remove noise by using a combination of an alternative sensor, such as a bone conduction microphone, and an air conduction microphone. This system is trained using three training channels: a noisy alternative sensor training signal, a noisy air conduction microphone training signal, and a clean air conduction microphone training signal. Each of the signals is converted into a feature domain. The features for the noisy alternative sensor signal and the noisy air conduction microphone signal are combined into a single vector representing a noisy signal. The features for the clean air conduction microphone signal form a single clean vector. These vectors are then used to train a mapping between the noisy vectors and the clean vectors. Once trained, the mappings are applied to a noisy vector formed from a combination of a noisy alternative sensor test signal and a noisy air conduction microphone test signal. This mapping produces a clean signal vector.

This system is less than optimal when the noise conditions of the test signals do not match the noise conditions of the training signals because the mappings are designed for the noise conditions of the training signals.

SUMMARY OF THE INVENTION

A method and apparatus determine a channel response for an alternative sensor using an alternative sensor signal and an air conduction microphone signal. The channel response is then used to estimate a clean speech value using at least a portion of the alternative sensor signal.

BRIEF DESCRIPTION OF THE DRAWINGS

FIG. 1 is a block diagram of one computing environment in which the present invention may be practiced.
FIG. 2 is a block diagram of an alternative computing environment in which the present invention may be practiced.
FIG. 3 is a block diagram of a general speech processing system of the present invention.
FIG. 4 is a block diagram of a system for enhancing speech one embodiment of the present invention.
FIG. 5 is a flow diagram for enhancing speech under one embodiment of the present invention.
FIG. 6 is a flow diagram for enhancing speech under another embodiment of the present invention.
FIG. 7 is a flow diagram for enhancing speech under a further embodiment of the present invention.

DETAILED DESCRIPTION OF ILLUSTRATIVE EMBODIMENTS

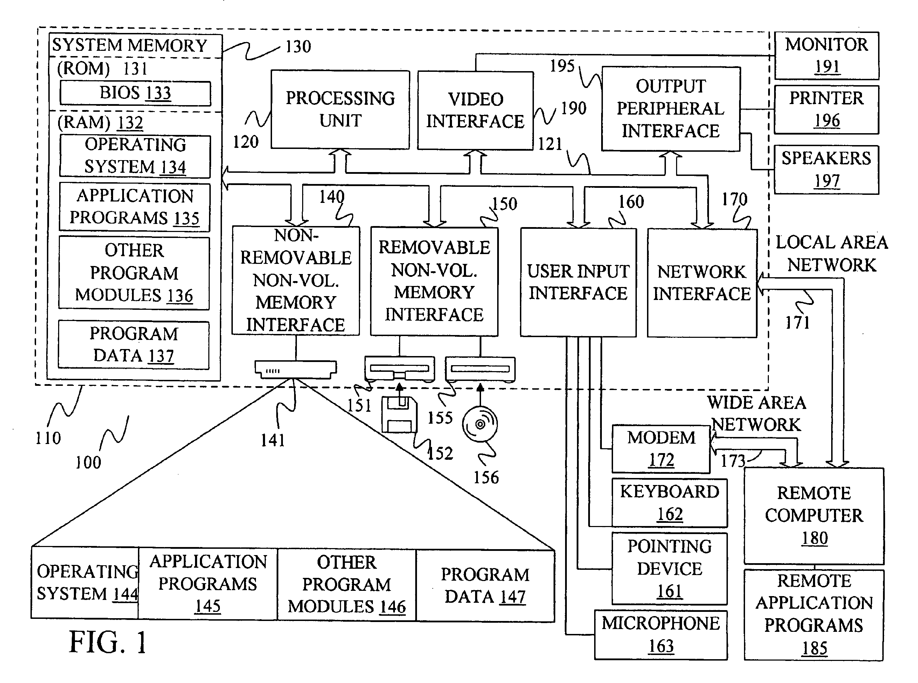

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well-known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, telephony systems, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention is designed to be practiced in distributed computing environments where tasks are performed by remote processing devices that are linked through a communications network. In a distributed computing environment, program modules are located in both local and remote computer storage media including memory storage devices.

With reference to FIG. 1, an exemplary system for implementing the invention includes a general-purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 142 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, came port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 is operated in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

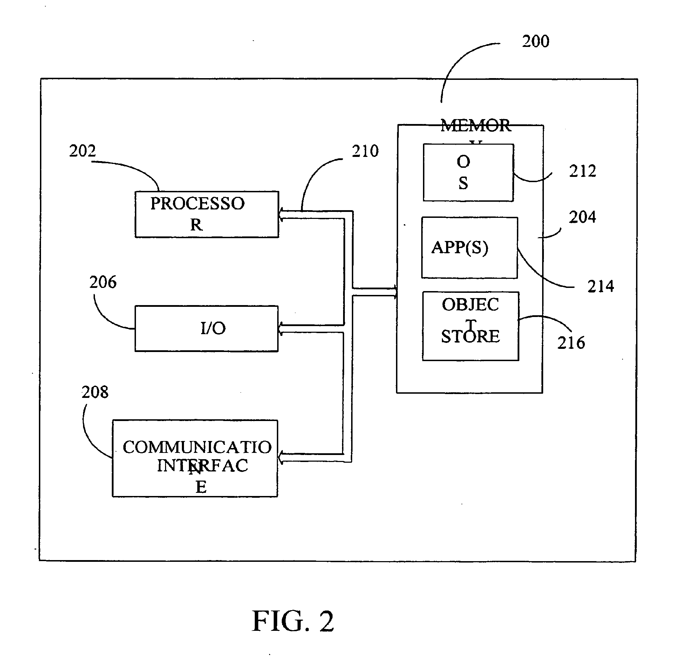

FIG. 2 is a block diagram of a mobile device 200, which is an exemplary computing environment. Mobile device 200 includes a microprocessor 202, memory 204, input/output (I/O) components 206, and a communication interface 208 for communicating with remote computers or other mobile devices. In one embodiment, the afore-mentioned components are coupled for communication with one another over a suitable bus 210.

Memory 204 is implemented as non-volatile electronic memory such as random access memory (RAM) with a battery back-up module (not shown) such that information stored in memory 204 is not lost when the general power to mobile device 200 is shut down. A portion of memory 204 is preferably allocated as addressable memory for program execution, while another portion of memory 204 is preferably used for storage, such as to simulate storage on a disk drive.

Memory 204 includes an operating system 212, application programs 214 as well as an object store 216. During operation, operating system 212 is preferably executed by processor 202 from memory 204. Operating system 212, in one preferred embodiment, is a WINDOWS® CE brand operating system commercially available from Microsoft Corporation. Operating system 212 is preferably designed for mobile devices, and implements database features that can be utilized by applications 214 through a set of exposed application programming interfaces and methods. The objects in object store 216 are maintained by applications 214 and operating system 212, at least partially in response to calls to the exposed application programming interfaces and methods.

Communication interface 208 represents numerous devices and technologies that allow mobile device 200 to send and receive information. The devices include wired and wireless modems, satellite receivers and broadcast tuners to name a few. Mobile device 200 can also be directly connected to a computer to exchange data therewith. In such cases, communication interface 208 can be an infrared transceiver or a serial or parallel communication connection, all of which are capable of transmitting streaming information.

Input/output components 206 include a variety of input devices such as a touch-sensitive screen, buttons, rollers, and a microphone as well as a variety of output devices including an audio generator, a vibrating device, and a display. The devices listed above are by way of example and need not all be present on mobile device 200. In addition, other input/output devices may be attached to or found with mobile device 200 within the scope of the present invention.

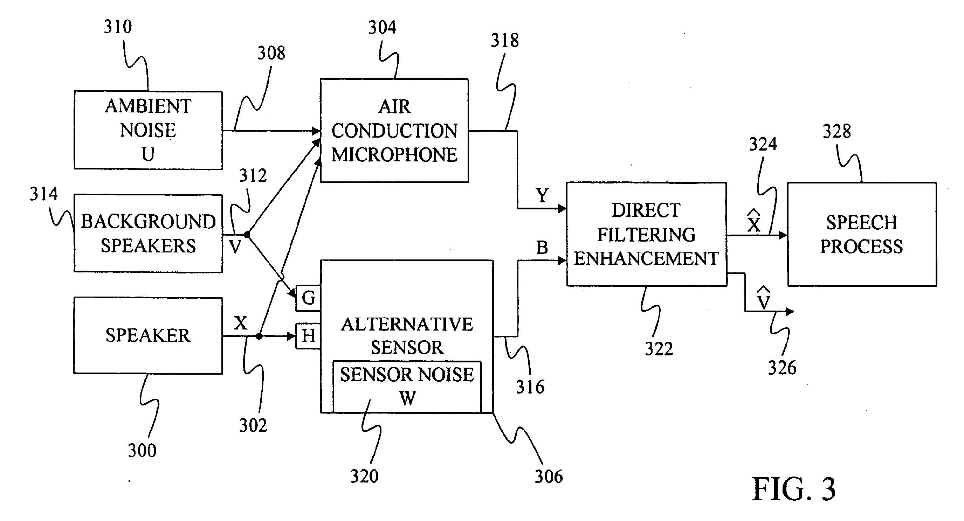

FIG. 3 provides a basic block diagram of embodiments of the present invention. In FIG. 3, a speaker 300 generates a speech signal 302 (X) that is detected by an air conduction microphone 304 and an alternative sensor 306. Examples of alternative sensors include a throat microphone that measures the user's throat vibrations, a bone conduction sensor that is located on or adjacent to a facial or skull bone of the user (such as the jaw bone) or in the ear of the user and that senses vibrations of the skull and jaw that correspond to speech generated by the user. Air conduction microphone 304 is the type of microphone that is used commonly to convert audio air-waves into electrical signals.

Air conduction microphone 304 also receives ambient noise 308 (U) generated by one or more noise sources 310 and background speech 312 (V) generated by background speaker(s) 314. Depending on the type of alternative sensor and the level of the background speech, background speech 312 may also be detected by alternative sensor 306. However, under embodiments of the present invention, alternative sensor 306 is typically less sensitive to ambient noise and background speech than air conduction microphone 304. Thus, the alternative sensor signal 316 (B) generated by alternative sensor 306 generally includes less noise than air conduction microphone signal 318 (Y) generated by air conduction microphone 304. Although alternative sensor 306 is less sensitive to ambient noise, it does generate some sensor noise 320 (W).

The path from speaker 300 to alternative sensor signal 316 can be modeled as a channel having a channel response H. The path from background speaker(s) 314 to alternative sensor signal 316 can be modeled as a channel have a channel response G.

Alternative sensor signal 316 (B) and air conduction microphone signal 318 (Y) are provided to a clean signal estimator 322, which estimates a clean signal 324 and in some embodiments, estimates a background speech signal 326. Clean signal estimate 324 is provided to a speech process 328. Clean signal estimate 324 may either be a filtered time-domain signal or a Fourier Transform vector. If clean signal estimate 324 is a time-domain signal, speech process 328 may take the form of a listener, a speech coding system, or a speech recognition system. If clean signal estimate 324 is a Fourier Transform vector, speech process 328 will typically be a speech recognition system, or contains an Inverse Fourier Transform to convert the Fourier Transform vector into waveforms.

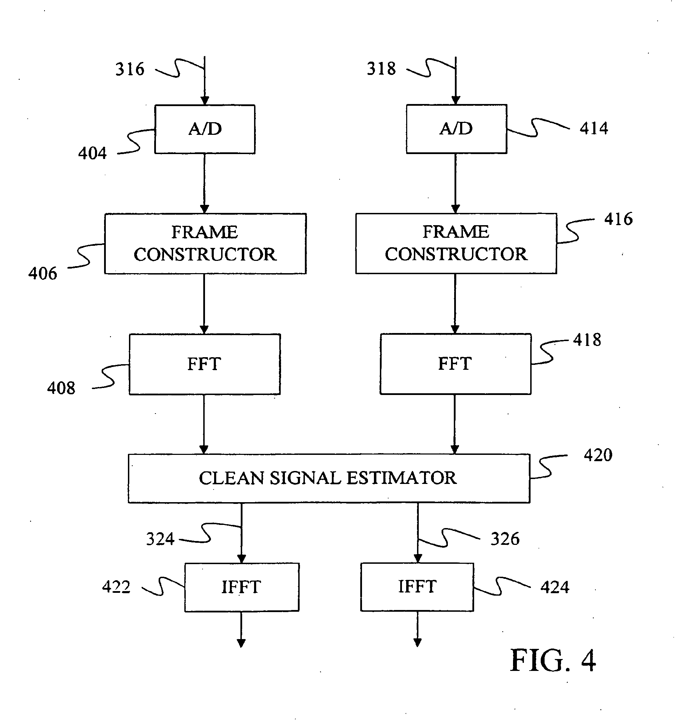

Within direct filtering enhancement 322, alternative sensor signal 316 and microphone signal 318 are converted into the frequency domain being used to estimate the clean speech. As shown in FIG. 4, alternative sensor signal 316 and air conduction microphone signal 318 are provided to analog-to-digital converters 404 and 414, respectively, to generate a sequence of digital values, which are grouped into frames of values by frame constructors 406 and 416, respectively. In one embodiment, A-to-D converters 404 and 414 sample the analog signals at 16 kHz and 16 bits per sample, thereby creating 32 kilobytes of speech data per second and frame constructors 406 and 416 create a new respective frame every 10 milliseconds that includes 20 milliseconds worth of data.

Each respective frame of data provided by frame constructors 406 and 416 is converted into the frequency domain using Fast Fourier Transforms (FFT) 408 and 418, respectively.

The frequency domain values for the alternative sensor signal and the air conduction microphone signal are provided to clean signal estimator 420, which uses the frequency domain values to estimate clean speech signal 324 and in some embodiments background speech signal 326.

Under some embodiments, clean speech signal 324 and background speech signal 326 are converted back to the time domain using Inverse Fast Fourier Transforms 422 and 424. This creates time-domain versions of clean speech signal 324 and background speech signal 326.

The present invention provides direct filtering techniques for estimating clean speech signal 324. Under direct filtering, a maximum likelihood estimate of the channel response(s) for alternative sensor 306 are determined by minimizing a function relative to the channel response(s). These estimates are then used to determine a maximum likelihood estimate of the clean speech signal by minimizing a function relative to the clean speech signal.

Under one embodiment of the present invention, the channel response G corresponding to background speech being detected by the alternative sensor is considered to be zero and the background speech and ambient noise are combined to form a single noise term. This results in a model between the clean speech signal and the air conduction microphone signal and alternative sensor signal of:

$$y(t) = x(t) + z(t) \qquad\qquad \text{Eq. 1}$$

$$b(t) = h(t) * x(t) + w(t) \qquad\qquad \text{Eq. 2}$$

where $y(t)$ is the air conduction microphone signal, $b(t)$ is the alternative sensor signal, $x(t)$ is the clean speech signal, $z(t)$ is the combined noise signal that includes background speech and ambient noise, $w(t)$ is the alternative sensor noise, and $h(t)$ is the channel response to the clean speech signal associated with the alternative sensor. Thus, in Equation 2, the alternative sensor signal is modeled as a filtered version of the clean speech, where the filter has an impulse response of $h(t)$ .

In the frequency domain, Equations 1 and 2 can be expressed as:

$$Y_t(k) = X_t(k) + Z_t(k) \qquad\qquad \text{Eq. 3}$$

$$B_t(k) = H_t(k)X_t(k) + W_t(k) \qquad \text{Eq. 4}$$

where the notation $Y_t(k)$ represents the *k*th frequency component of a frame of a signal centered around time t. This notation applies to $X_t(k)$, $Z_t(k)$, $H_t(k)$, $W_t(k)$, and $B_t(k)$. In the discussion below, the reference to frequency component k is omitted for clarity. However, those skilled in the art will recognize that the computations performed below are performed on a per frequency component basis.

Under this embodiment, the real and imaginary parts of the noise $Z_t$ and $W_t$ are modeled as independent zero-mean Gaussians such that:

$$Z_t = N(0, \sigma_z^2) \qquad \text{Eq. 5}$$

$$W_t = N(0, \sigma_w^2) \qquad \text{Eq. 6}$$

where $\sigma_z^2$ is the variance for noise $Z_t$ and $\sigma_w^2$ is the variance for noise $W_t$.

$H_t$ is also modeled as a Gaussian such that

$$H_t = N(H_0, \sigma_H^2) \qquad \text{Eq. 7}$$

where $H_0$ is the mean of the channel response and $\sigma_H^2$ is the variance of the channel response.

Given these model parameters, the probability of a clean speech value $Y_t$ and a channel response value $H_t$ is described by the conditional probability:

$$p(X_t, H_t \mid Y_t, B_t, H_0 \sigma_z^2, \sigma_w^2, \sigma_H^2) \qquad \text{Eq. 8}$$

which is proportional to:

$$p(Y_t, B_t \mid X_t, H_t, \sigma_z^2 \sigma_w^2)p(H_t \mid H_0, \sigma_H^2)p(X_t) \qquad \text{Eq. 9}$$

which is equal to:

$$p(Y_t \mid X_t, \sigma_z^2)p(B_t \mid X_t, H_t, \sigma_w^2)p(H_t \mid H_0, \sigma_H^2)p(X_t)$$

$$\text{Eq. 10}$$

In one embodiment, the prior probability for the channel response, $p(H_t \mid H_0, \sigma_H^2)$, and the prior probability for the clean speech signal, $p(X_t)$, are ignored and the remaining probabilities are treated as Gaussian distributions. Using these simplifications, Equation 10 becomes:

$$\frac{1}{(2\pi)^2 \sigma_z^2 \sigma_w^2} \exp[-\frac{1}{2\sigma_z^2}|Y_t - X_t|^2 - \frac{1}{2\sigma_w^2}|B_t - H_t X_t|^2]$$

Eq. 11

Thus, the maximum likelihood estimate of $H_t, X_t$ for an utterance is determined by minimizing the exponent term of Equation 11 across all time frames T in the utterance. Thus, the maximum likelihood estimate is given by minimizing:

$$F = \sum_{t=1}^{T}(\frac{1}{2\sigma_z^2}|Y_t - X_t|^2 + \frac{1}{2\sigma_w^2}|B_t - H_t X_t|^2) \quad Eq. \ 12$$

Since Equation 12 is being minimized with respect to two variables, $X_t, H_t$, the partial derivative with respect to each variable may be taken to determine the value of that variable that minimizes the function. Specifically, $\frac{\partial F}{\partial X_t} = 0$ gives:

$$X_t = \frac{1}{\sigma_w^2 + \sigma_z^2|H_t|^2}(\sigma_w^2 Y_t + \sigma_z^2 H_t^* B_t)$$

Eq. 13

where $H_t^*$ represent the complex conjugate of $H_t$ and $|H_t|$ represents the magnitude of the complex value $H_t$.

Substituting this value of $X_t$ into Equation 12, setting the partial derivative $\frac{\partial F}{\partial H_t} = 0$, and then assuming that H is constant across all time frames T gives a solution for H of:

$$H = \frac{\sum_{t=1}^{T}(\sigma_z^2|B_t|^2 - \sigma_w^2|Y_t|^2) \pm \sqrt{(\sum_{t=1}^{T}(\sigma_z^2|B_t|^2 - \sigma_w^2|Y_t|^2))^2 + 4\sigma_z^2\sigma_w^2|\sum_{t=1}^{T}B_t^* Y_t|^2}}{2\sigma_z^2 \sum_{t=1}^{T}B_t^* Y_t}$$

Eq. 14

In Equation 14, the estimation of H requires computing several summations over the last T frames in the form of:

$$S(T) = \sum_{t=1}^{T}s_t \qquad Eq. \ 15$$

where $s_t$ is ($\sigma_z^2 |B_t|^2 - \sigma_w^2 |Y_t|^2$)_or $B_t^* Y_t$

With this formulation, the first frame (t = 1) is as important as the last frame (t = T). However, in other embodiments it is preferred that the latest frames contribute more to the estimation of H than the older frames. One technique to achieve this is "exponential aging", in which the summations of Equation 15 are replaced with:

$$S(T) = \sum_{t=1}^{T} c^{T-t} s_t \qquad \text{Eq. 16}$$

where $c \leq 1$. If c = 1, then Equation 16 is equivalent to Equation 15. If c < 1, then the last frame is weighted by 1, the before-last frame is weighted by c (i.e., it contributes less than the last frame), and the first frame is weighted by $C^{T-1}$ (i.e., it contributes significantly less than the last frame). Take an example. Let c = 0.99 and T = 100, then the weight for the first frame is only 0.9999 = 0.37.

Under one embodiment, Equation 16 is estimated recursively as:

$$S(T) = cS'(T-1) + s_T \qquad \text{Eq. 17}$$

Since Equation 17 automatically weights old data less, a fixed window length does not need to be used, and data of the last T frames do not need to be stored in the memory. Instead, only the value for S(T-1) at the previous frame needs to be stored.

Using Equation 17, Equation 14 becomes:

$$H_T = \frac{J(T) \pm \sqrt{(J(T))^2 + 4\sigma_z^2 \sigma_w^2 |K(T)|^2}}{2\sigma_z^2 K(T)} \qquad \text{Eq. 18}$$

where:

$$J(T) = cJ(T-1) + (\sigma_z^2 |B_T|^2 - \sigma_w^2 |Y_T|^2) \qquad \text{Eq. 19}$$

$$K(T) = cK(T-1) + B_T^* Y_T \qquad \text{Eq. 20}$$

The value of c in equations 19 and 20 provides an effective length for the number of past frames that are used to compute the current value of J(T) and K(T). Specifically, the effective length is given by:

$$L(T) = \sum_{t=1}^{T} c^{T-t} = \sum_{i=0}^{T-1} c^i = \frac{1-c^T}{1-c} \qquad \text{Eq. 21}$$

The asymptotic effective length is given by:

$$L = \lim_{T \to \infty} L(T) = \frac{1}{1-c} \qquad \text{Eq. 22}$$

or equivalently,

$$c = \frac{L-1}{L} \qquad \text{Eq. 23}$$

Thus, using equation 23, c can be set to achieve different effective lengths in equation 18. For example, to achieve an effective length of 200 frames, c is set as:

$$c = \frac{199}{200} = 0.995 \qquad \text{Eq. 24}$$

Once H has been estimated using Equation 14, it may be used in place of all $H_t$ of Equation 13 to determine a separate value of $X_t$ at each time frame t. Alternatively, equation 18 may be used to estimate $H_t$ at each time frame t. The value of $H_t$ at each frame is then used in Equation 13 to determine $X_t$.

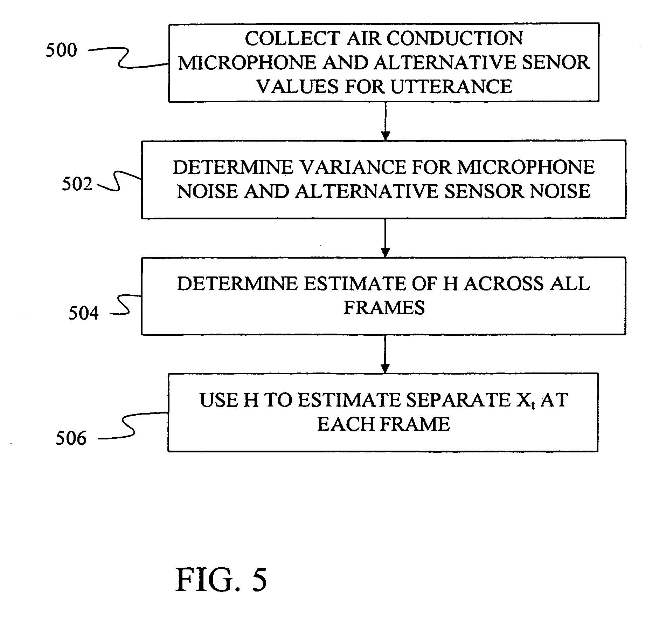

FIG. 5 provides a flow diagram of a method of the present invention that uses Equations 13 and 14 to estimate a clean speech value for an utterance.

At step 500, frequency components of the frames of the air conduction microphone signal and the alternative sensor signal are captured across the entire utterance.

At step 502 the variance for air conduction microphone noise $\sigma_z^2$, and the alternative sensor noise $\sigma_w^2$ is determined from frames of the air conduction microphone signal and alternative sensor signal, respectively, that are captured early in the utterance during periods when the speaker is not speaking.

The method determines when the speaker is not speaking by identifying low energy portions of the alternative sensor signal, since the energy of the alternative sensor noise is much smaller than the speech signal captured by the alternative sensor signal. In other embodiments, known speech detection techniques may be applied to the air conduction speech signal to identify when the speaker is speaking. During periods when the speaker is not considered to be speaking, $X_t$ is assumed to be zero and any signal from the air conduction microphone or the alternative sensor is considered to be noise. Sampies of these noise values are collected from the frames of non-speech and are used to estimate the variance of the noise in the air conduction signal and the alternative sensor signal.

At step 504, the values for the alternative sensor signal and the air conduction microphone signal across all of the frames of the utterance are used to determine a value of H using Equation 14 above. At step 506, this value of E is used together with the individual values of the air conduction microphone signal and the alternative sensor signal at each time frame to determine an enhanced or noise-reduced speech value for each time frame using Equation 13 above.

In other embodiments, instead of using all of the frames of the utterance to determine a single value of H using Equation 14, $H_t$ is determined for each frame using Equation 18. The value of $H_t$ is then used to compute $X_t$ for the frame using Equation 13 above.

In a second embodiment of the present invention, the channel response of the alternative sensor to background speech is considered to be non-zero. In this embodiment, the air conduction microphone signal and the alternative sensor signal are modeled as:

$$Y_t(k) = X_t(k) + V_t(k) + U_t(k) \qquad \text{Eq. 25}$$

$$B_t(k) = H_t(k)X_t(k) + G_t(k)V_t(k) + W_t(k) \qquad \text{Eq. 26}$$

where noise $Z_t(k)$ has been separated into background speech $V_t(k)$ and ambient noise $U_t(k)$, and the alternative sensors channel response to the background speech is a non-zero value of $G_t(k)$.

Under this embodiment, the prior knowledge of the clean speech $X_t$ continues to be ignored. Making this assumption, the maximum likelihood for the clean speech $X_t$ can be found by minimizing the objective function:

$$F = \frac{1}{\sigma_w^2}|B_t - H_tX_t - G_tV_t|^2 + \frac{1}{\sigma_u^2}|Y_t - X_t - V_t|^2 + \frac{1}{\sigma_v^2}|V_t|^2$$

$$\text{Eq. 27}$$

This results in an equation for the clean speech of:

$$X_t = \frac{(\sigma_w^2 + \sigma_u^2 H_t^* G_t)Y_t + [(\sigma_u^2 + \sigma_v^2)H_t^* - \sigma_v^2 G_t^*](B_t - G_t Y_t)}{\sigma_v^2 |H_t - G_t|^2 + \sigma_w^2 + \sigma_u^2 |H_t|^2}$$

Eq. 28

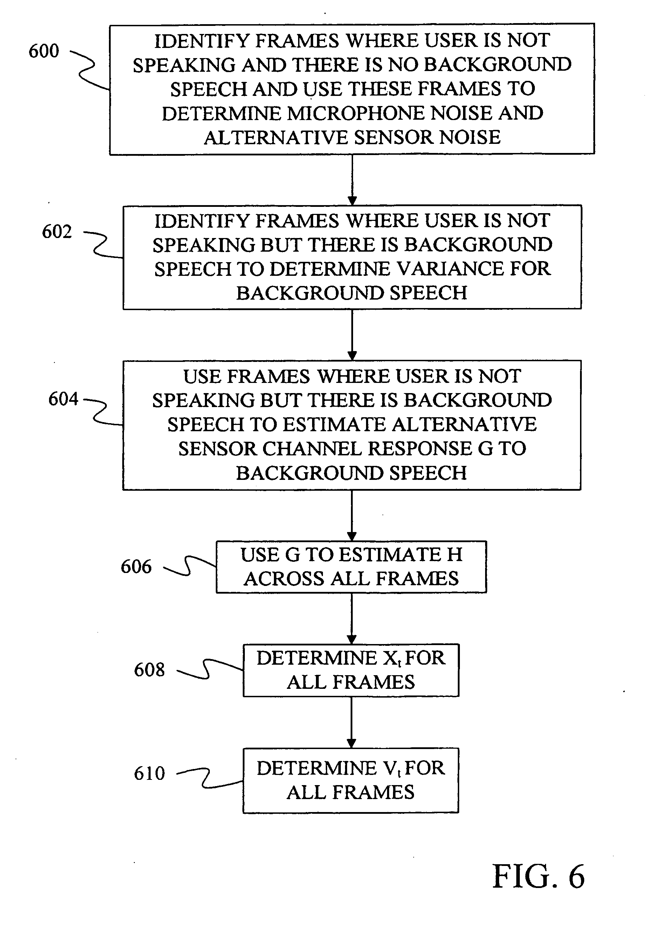

In order to solve Equation 28, the variances $\sigma_w^2, \sigma_u^2$ and $\sigma_v^2$ as well as the channel response values $H_t$ and $G_t$ must be known. FIG. 6 provides a flow diagram for identifying these values and for determining enhanced speech values for each frame.

In step 600, frames of the utterance are identified where the user is not speaking and there is no background speech. These frames are then used to determine the variance $\sigma_w^2$ and $\sigma_u^2$ for the alternative sensor and the air conduction microphone, respectively.

To identify frames where the user is not speaking, the alternative sensor signal can be examined. Since the alternative sensor signal will produce much smaller signal values for background speech than for noise, if the energy of the alternative sensor signal is low, it can be assumed that the speaker is not speaking. Within the frames identified based on the alternative signal, a speech detection algorithm can be applied to the air conduction microphone signal. This speech detection system will detect whether there is background speech present in the air conduction microphone signal when the user is not speaking. Such speech detection algorithms are well known in the art and include systems such as pitch tracking systems.

After the variances for the noise associated with the air conduction microphone and the alternative sensor have been determined, the method of FIG. 6 continues at step 602 where it identifies frames where the user is not speaking but there is background speech present. These frames are identified using the same technique described above but selecting those frames that include background speech when the user is not speaking. For those frames that include background speech when the user is not speaking, it is assumed that the background speech is much larger than the ambient noise. As such, any variance in the air conduction microphone signal during those frames is considered to be from the background speech. As a result, the variance $\sigma_v^2$ can be set directly from the values of the air conduction microphone signal during those frames when the user is not speaking but there is background speech.

At step 604, the frames identified where the user is not speaking but there is background speech are used to estimate the alternative sensor's channel response G for background speech. Specifically, G is determined as:

$$G = \frac{\sum_{t=1}^{D}(\sigma_u^2 |B_t|^2 - \sigma_w^2 |Y_t|^2) \pm \sqrt{(\sum_{t=1}^{D}(\sigma_u^2 |B_t|^2 - \sigma_w^2 |Y_t|^2))^2 + 4\sigma_u^2 \sigma_w^2 |\sum_{t=1}^{D} B_t^* Y_t|^2}}{2\sigma_u^2 \sum_{t=1}^{D} B_t^* Y_t}$$

Eq. 29

Where D is the number of frames in which the user is not speaking but there is background speech. In Equation 29, it is assumed that G remains constant through all frames of the utterance and thus is no longer dependent on the time frame t.

At step 606, the value of the alternative sensor's channel response G to the background speech is used to determine the alternative sensor's channel response to the clean speech signal. Specifically, H is computed as:

$$H = G + \frac{\sum_{t=1}^{T}(\sigma_v^2 |B_t - GY_t|^2 - \sigma_w^2 |Y_t|^2) \pm \sqrt{(\sum_{t=1}^{T}(\sigma_v^2 |B_t - GY_t|^2 - \sigma_w^2 |Y_t|^2))^2 + 4\sigma_v^2 \sigma_w^2 |\sum_{t=1}^{T}(B_t - GY_t)^* Y_t|^2}}{2\sigma_v^2 \sum_{t=1}^{T}(B_t - GY_t)^* Y_t}$$

Eq. 30

In Equation 30, the summation over T may be replaced with the recursive exponential decay calculation discussed above in connection with equations 15-24.

After H has been determined at step 606, Equation 28 may be used to determine a clean speech value for all of the frames. In using Equation 28, $H_t$ and $G_t$ are replaced with time independent values H and G, respectively. In addition, under some embodiments, the term $B_t$ - $GY_t$ in Equation 28 is replaced with $(1-\frac{|GY_t|}{|B_t|})B_t$ because it has been found to be difficult to accurately determine the phase difference between the background speech and its leakage into the alternative sensor.

If the recursive exponential decay calculation is used in place of the summations in Equation 30, a separate value of $H_t$ may be determined for each time frame and may be used as $H_t$ in equation 28.

In a further extension of the above embodiment, it is possible to provide an estimate of the background speech signal at each time frame. In particular, once the clean speech value has been determined, the background speech value at each frame may be determined as:

$$V_t = \frac{1}{\sigma_w^2 + H^* G_w^2}[\sigma_w^2 Y_t + \sigma_u^2 H^* B_t - (\sigma_w^2 + |H|^2 \sigma_u^2)X_t]$$

$$\text{Eq. 31}$$

This optional step is shown as step 610 in FIG. 6.

In the above embodiments, prior knowledge of the channel response of the alternative sensor to the clean speech signal has been ignored. In a further embodiment, this prior knowledge can be utilized, if provided, to generate an estimate of the channel response at each time frame $H_t$ and to determine the clean speech value $X_t$.

In this embodiment, the channel response to the background speech noise is once again assumed to be zero. Thus, the model of the air conduction signal and the alternative sensor signal is the same as the model shown in Equations 3 and 4 above.

Equations for estimating the clean speech value and the channel response $H_t$ at each time frame are determined by minimizing the objective function:

$$-\frac{1}{2\sigma_z^2}|Y_t - X_t|^2 - \frac{1}{2\sigma_w^2}|B_t - H_t X_t|^2 - \frac{1}{2\sigma_H^2}|H_t - H_0|^2$$

$$\text{Eq. 32}$$

This objective function is minimized with respect to $X_t$ and $H_t$ by taking the partial derivatives relative to these two variables independently and setting the results equal to zero. This provides the following equations for $X_t$ and $H_t$:

$$X_t = \frac{1}{\sigma_w^2 + \sigma_v^2 |H_t|^2}(\sigma_w^2 Y_t + \sigma_v^2 H_t^* B_t)$$

$$\text{Eq. 33}$$

$$H_t = \frac{1}{\sigma_w^2 + \sigma_H^2 |X_t|^2}(\sigma_H^2 B_t X_t^* + \sigma_w^2 H_0)$$

$$\text{Eq. 34}$$

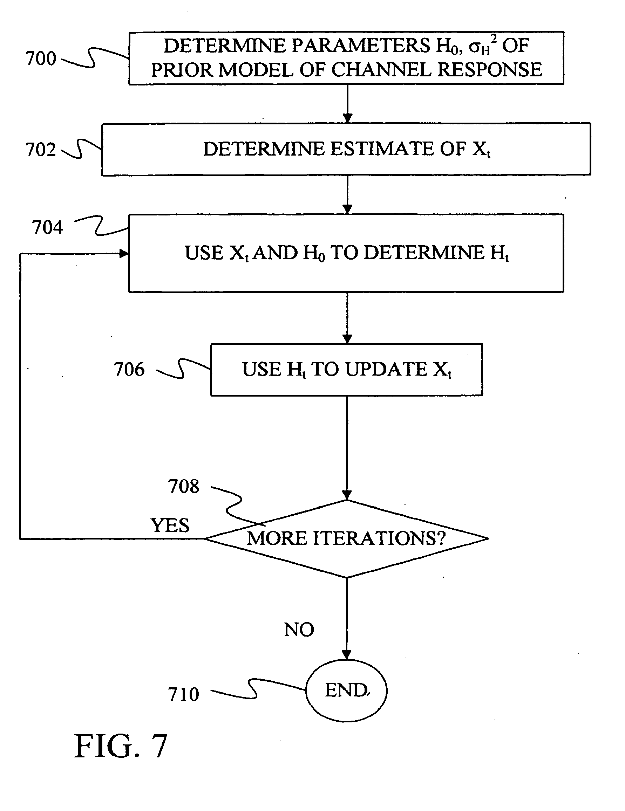

Where $H_0$ and $\sigma_H^2$ are the mean and variance, respectively, of the prior model for the channel response of the alternative sensor to the clean speech signal. Because the equation for $X_t$ includes $H_t$ and the equation for $H_t$ includes the variable $X_t$, Equations 33 and 34 must be solved in an iterative manner. FIG. 7 provides a flow diagram for performing such an iteration.

In step 700 of FIG. 7, the parameters for the prior model for the channel response are determined. At step 702,

an estimate of $X_t$ is determined. This estimate can be determined using either of the earlier embodiments described above in which the prior model of the channel response was ignored. At step 704, the parameters of the prior model and the initial estimate of $X_t$ are used to determine $H_t$ using Equation 34. $H_t$ is then used to update the clean speech values using Equation 33 at step 706. At step 708, the process determines if more iterations are desired. If more iterations are desired, the process returns to step 704 and updates the value of $H_t$ using the updated values of $X_t$ determined in step 706. Steps 704 and 706 are repeated until no more iterations are desired at step 708, at which point the process ends at step 710.

Although the present invention has been described with reference to particular embodiments, workers skilled in the art will recognize that changes may be made in form and detail without departing from the scope of the invention.

## Claims

1.  A method of determining an estimate for a noise-reduced value representing a portion of a noise-reduced speech signal (324), the method comprising:

    generating an alternative sensor signal (316) using an alternative sensor (306) other than an air conduction microphone (304);
    generating an air conduction microphone signal (318);

    **characterized by**

    using the alternative sensor signal (316) and the air conduction microphone signal (318) to estimate a value of a channel response of the alternative sensor signal, and
    using the channel response to estimate the noise-reduced value

2.  The method of claim 1 wherein estimating a value of a channel response comprises finding an extreme of an objective function.

3.  The method of claim 1 wherein estimating a channel response comprises modeling the alternative sensor signal (316) as a clean speech signal (302) convolved with the channel response, with the result summed with a noise term.

4.  The method of claim 1 wherein the channel response comprises a channel response to a clean speech signal.

5.  The method of claim 4 further comprising determining a channel response of the alternative sensor (306) to a background speech signal (312).

6.  The method of claim 5 wherein using the channel response to estimate the noise-reduced value comprises using the channel response to the clean speech signal (302) and the channel response to the background speech signal (316) to estimate the noise-reduced value.

7.  The method of claim 1 further comprising using the estimate of the noise-reduced value to estimate a value of a background speech signal.

8.  The method of claim 1 wherein estimating a value for a channel response comprises using a sequence of frames of the alternative sensor signal (316) and the air conduction microphone signal (318) to estimate a single channel response value of the frames of the sequence of frames.

9.  The method of claim 8 wherein using the channel response to estimate a noise-reduced value comprises estimating a separate noise-reduced value of each frame of the sequence of frames.

10. The method of claim 1 wherein estimating a value for a channel response comprises estimating the value of a current frame by weighting values of the alternative sensor signal (316) and the air conduction microphone signal (318) of the current frame more heavily than values of the alternative sensor signal and the air conduction microphone signal of a previous frame.

11. A computer-readable medium having computer-executable instructions adapted to perform steps comprising:

determining a channel response for an alternative sensor (306) other than an air conduction microphone (304) using an alternative sensor signal (316) and an air conduction microphone signal (304); and

using the channel response to estimate a clean speech value using at least a portion of the alternative sensor signal (316).

12. The computer-readable medium of claim 11 wherein determining a channel response comprises determining a single channel response of a sequence of frames of the alternative sensor signal (316) and the air conduction microphone signal (318).

13. The computer-readable medium of claim 11 wherein the channel response comprises a channel response to a clean speech signal.

14. The computer-readable medium of claim 13 further comprising determining a channel response to a background speech signal (312).

15. The computer-readable medium of claim 14 further comprising using the channel response to the background speech signal (312) with the channel response to the clean speech signal (302) to estimate the clean speech value.

16. The computer-readable medium of claim 11 further comprising using the clean speech value to estimate a background speech value.

17. A method of identifying a clean speech signal (302), the method comprising:

estimating noise parameters that describe noise in an alternative sensor signal (326) from an alternative sensor (306) other than an air conduction microphone (304);
using the noise parameters to estimate a channel response of an alternative sensor; and
using the channel response to estimate a value of the clean speech signal (302).

18. The method of claim 17 wherein estimating noise parameters comprises using the alternative sensor signal (316) to identify periods when a user is not speaking and background speech is not present.

19. The method of claim 18 further comprising performing speech detection on portions of an air conduction microphone signal (318) associated with the periods when the user is not speaking to identify no-speech periods and background speech periods.

20. The method of claim 19 further comprising using portions of the alternative sensor signal (316) associated with the no-speech periods to estimate the noise parameters.

21. The method of claim 20 further comprising using the no-speech periods to estimate noise parameters that describe noise for the air conduction microphone signal.

22. The method of claim 20 further comprising using the portions of the alternative sensor signal (316) associated with the background speech periods to estimate a channel response to background speech (312).

23. The method of claim 22 further comprising using the channel response to background speech (312) to estimate clean speech (302).

24. The method of claim 17 further comprising determining an estimate of a background speech value.

25. The method of claim 24 wherein determining an estimate of a background speech value comprises using the estimate of the clean speech value to estimate the background speech value.

26. The method of claim 17 further comprising using a prior model of the channel response to estimate the clean speech value.

**Patentansprüche**

1. Verfahren zum Bestimmen einer Schätzung eines rauschverminderten Wertes, der einen Teil eines rauschverminderten Sprachsignals (324) darstellt, wobei das Verfahren beinhaltet:

   Erzeugen eines Alternativsensorsignals (316) unter Verwendung eines Alternativsensors (306), der kein Luftübertragungsmikrofon (304) ist;
   Erzeugen eines Luftübertragungsmikrofonsignals (318);
   **gekennzeichnet durch**
   Verwenden des Alternativsensorsignals (316) und des Luftübertragungsmikrofonsignals (318) zum Schätzen eines Wertes einer Kanalantwort des Alternativsensorsignals und
   Verwenden der Kanalantwort zum Schätzen des rauschverminderten Wertes.

2. Verfahren nach Anspruch 1, wobei das Schätzen eines Wertes einer Kanalantwort ein Auffinden eines Extremums einer Objektivfunktion beinhaltet.

3. Verfahren nach Anspruch 1, wobei das Schätzen einer Kanalantwort ein Modellieren des Alternativsensorsignals (316) als Reinsprachsignal (302) in Faltung mit der Kanalantwort beinhaltet, wobei das Ergebnis mit einem Rauschterm summiert wird.

4. Verfahren nach Anspruch 1, wobei die Kanalantwort eine Kanalantwort auf ein Reinsprachsignal beinhaltet.

5. Verfahren nach Anspruch 4, des Weiteren beinhaltend ein Bestimmen einer Kanalantwort des Alternativsensors (306) auf ein Hintergrundsprachsignal (312).

6. Verfahren nach Anspruch 5, wobei das Verwenden der Kanalantwort zum Schätzen des rauschverminderten Wertes ein Verwenden der Kanalantwort auf das Reinsprachsignal (302) und der Kanalantwort auf das Hintergrundsprachsignal (316) zum Schätzen des rauschverminderten Wertes beinhaltet.

7. Verfahren nach Anspruch 1, des Weiteren beinhaltend ein Verwenden der Schätzung des rauschverminderten Wertes zum Schätzen eines Wertes eines Hintergrundsprachsignals.

8. Verfahren nach Anspruch 1, wobei das Schätzen eines Wertes für eine Kanalantwort ein Verwenden einer Sequenz von Rahmen bzw. Frames des Alternativsensorsignals (316) und des Luftübertragungsmikrofonsignals (318) zum Schätzen eines Einzelkanalantwortwertes der Rahmen bzw. Frames der Sequenz von Rahmen bzw. Frames beinhaltet.

9. Verfahren nach Anspruch 8, wobei das Verwenden der Kanalantwort zum Schätzen eines rauschverminderten Wertes ein Schätzen eines separaten rauschverminderten Wertes jedes Rahmens bzw. Frame der Sequenz von Rahmen bzw. Frames beinhaltet.

10. Verfahren nach Anspruch 1, wobei das Schätzen eines Wertes für eine Kanalantwort ein dadurch erfolgendes Schätzen des Wertes eines aktuellen Rahmens bzw. Frame, dass Werte des Alternativsensorsignals (316) und des Luftübertragungsmikrofonsignals (318) des aktuellen Rahmens bzw. Frame stärker als Werte des Alternativsensorsignals und des Luftübertragungsmikrofonsignals eines vorherigen Rahmens bzw. Frame gewichtet werden, beinhaltet.

11. Computerlesbares Medium mit computerseitig ausführbaren Anweisungen, die dafür ausgelegt sind, Schritte durchzuführen, die beinhalten:

   Bestimmen einer Kanalantwort für einen Alternativsensor (306), der kein Luftübertragungsmikrofon (304) ist, unter Verwendung eines Alternativsensorsignals (316) und eines Luftübertragungsmikrofonsignals (304); und
   Verwenden der Kanalantwort zum Schätzen eines Reinsprachsignals unter Verwendung wenigstens eines Teils des Alternativsensorsignals (316).

12. Computerlesbares Medium nach Anspruch 11, wobei das Bestimmen einer Kanalantwort ein Bestimmen einer Einzelkanalantwort einer Sequenz von Rahmen bzw. Frames des Alternativsensorsignals (316) und des Luftübertragungsmikrofonsignals (318) beinhaltet.

**13.** Computerlesbares Medium nach Anspruch 11, wobei die Kanalantwort eine Kanalantwort auf ein Reinsprachsignal beinhaltet.

**14.** Computerlesbares Medium nach Anspruch 13, des Weiteren beinhaltend ein Bestimmen einer Kanalantwort auf ein Hintergrundsprachsignal (312).

**15.** Computerlesbares Medium nach Anspruch 14, des Weiteren beinhaltend ein Verwenden der Kanalantwort auf das Hintergrundsprachsignal (312) mit der Kanalantwort auf das Reinsprachsignal (302) zum Schätzen des Reinsprachwertes.

**16.** Computerlesbares Medium nach Anspruch 11, des Weiteren beinhaltend ein Verwenden des Reinsprachwertes zum Schätzen eines Hintergrundsprachwertes.

**17.** Verfahren zum Identifizieren eines Reinsprachsignals (302), wobei das Verfahren beinhaltet:

Schätzen von Rauschparametern, die ein Rauschen in einem Alternativsensorsignal (326) aus einem Alternativsensor (306), der kein Luftübertragungsmikrofon (304) ist, beschreiben;
Verwenden der Rauschparameter zum Schätzen einer Kanalantwort eines Alternativsensors; und
Verwenden der Kanalantwort zum Schätzen eines Wertes des Reinsprachsignals (302).

**18.** Verfahren nach Anspruch 17, wobei das Schätzen von Rauschparametern ein Verwenden des Alternativsensorsignals (316) zum Identifizieren von Zeitspannen beinhaltet, in denen ein Anwender nicht spricht und keine Hintergrundsprache vorhanden ist.

**19.** Verfahren nach Anspruch 18, des Weiteren beinhaltend ein Durchführen einer Spracherfassung bzw. Spracherkennung an Abschnitten eines Luftübertragungsmikrofonsignals (318), die denjenigen Zeitspannen zugeordnet sind, in denen der Anwender nicht spricht, zum Identifizieren von Nichtsprachzeitspannen und Hintergrundsprachzeitspannen.

**20.** Verfahren nach Anspruch 19, des Weiteren beinhaltend ein Verwenden von Abschnitten des Alternativsensorsignals (316), die den Nichtsprachzeitspannen zugeordnet sind, zum Schätzen der Rauschparameter.

**21.** Verfahren nach Anspruch 20, des Weiteren beinhaltend ein Verwenden der Nichtsprachzeitspannen zum Schätzen von Rauschparametern, die ein Rauschen für das Luftübertragungsmikrofonsignal beschreiben.

**22.** Verfahren nach Anspruch 20, des Weiteren beinhaltend ein Verwenden der Abschnitte des Alternativsensorsignals (316), die den Hintergrundsprachzeitspannen zugeordnet sind, zum Schätzen einer Kanalantwort auf Hintergrundsprache (312).

**23.** Verfahren nach Anspruch 22, des Weiteren beinhaltend ein Verwenden der Kanalantwort auf Hintergrundsprache (312) zum Schätzen von Reinsprache (302).

**24.** Verfahren nach Anspruch 17, des Weiteren beinhaltend ein Bestimmen einer Schätzung eines Hintergrundsprachwertes.

**25.** Verfahren nach Anspruch 24, wobei das Bestimmen einer Schätzung eines Hintergrundsprachwertes ein Verwenden der Schätzung des Reinsprachwertes zum Bestimmen des Hintergrundsprachwertes beinhaltet.

**26.** Verfahren nach Anspruch 17, des Weiteren beinhaltend ein Verwenden eines älteren Modells der Kanalantwort zum Schätzen des Reinsprachwertes.

**Revendications**

**1.** Procédé de détermination d'une estimation pour une valeur à bruit réduit représentant une partie d'un signal de parole à bruit réduit (324), procédé comprenant :

la production d'un signal de capteur de substitution (316) à l'aide d'un capteur de substitution (306) autre qu'un microphone à conduction aérienne (304) ;
la production d'un signal de microphone à conduction aérienne (318) ;
**caractérisé par**
l'utilisation du signal de capteur de substitution (316) et du signal de microphone à conduction aérienne (318) pour estimer une valeur d'une réponse de canal du signal capteur de substitution, et
l'utilisation de la réponse de canal pour estimer la valeur à bruit réduit.

2. Procédé conformément à la revendication 1, dans lequel l'estimation d'une valeur d'une réponse de canal comprend le fait de trouver un extrême d'une fonction objectif.

3. Procédé conformément à la revendication 1, dans lequel l'estimation d'une réponse de canal comprend la modélisation du signal de capteur de substitution (316) en tant que signal de parole propre (302) convolutionné avec la réponse de canal, le résultant étant additionné avec le terme de bruit.

4. Procédé conformément à la revendication 1, dans lequel la réponse de canal comprend une réponse de canal à un signal de parole propre.

5. Procédé conformément à la revendication 4 comprenant en outre la détermination d'une réponse de canal du capteur de substitution (306) à un signal de parole de fond (312).

6. Procédé conformément à la revendication 5, dans lequel l'utilisation de la réponse de canal pour estimer la valeur à bruit réduit comprend l'utilisation de la réponse de canal au signal de parole propre (302) et de la réponse de canal au signal de parole de fond (312) pour estimer la valeur à bruit réduit.

7. Procédé conformément à la revendication 1, comprenant en outre l'estimation de la valeur à bruit réduit pour estimer une valeur d'un signal de parole de fond.

8. Procédé conformément à la revendication 1, dans lequel l'estimation d'une valeur pour une réponse de canal comprend l'utilisation d'une séquence de trames du signal de capteur de substitution (316) et du signal de microphone à conduction aérienne (318) pour estimer une valeur de réponse de canal unique des trames de la séquence de trames.

9. Procédé conformément à la revendication 8, dans lequel l'utilisation de la réponse de canal pour estimer une valeur à bruit réduit comprend une estimation d'une valeur à bruit réduit séparée de chaque de trame de la séquence de trames.

10. Procédé conformément à la revendication 1, dans lequel l'estimation d'une valeur pour une réponse de canal comprend une estimation de la valeur d'une trame courante en pondérant des valeurs du signal de capteur de substitution (316) et du signal de microphone à conduction aérienne (318) de la trame courante de façon plus lourde que des valeurs du signal de capteur de substitution et du signal de microphone à conduction aérienne d'une trame précédente.

11. Support lisible par ordinateur ayant des instructions exécutables par ordinateur conçues pour exécuter des étapes :

de détermination d'une réponse de canal pour un capteur de substitution (306), autre qu'un microphone à conduction aérienne (304), à l'aide d'un signal de capteur de substitution (316) et d'un signal de microphone à conduction aérienne (318) ; et
d'utilisation de la réponse de canal pour estimer une valeur de parole propre à l'aide d'au moins une partie du signal de capteur de substitution (316).

12. Support lisible par ordinateur conformément à la revendication 11, dans lequel la détermination d'une réponse de canal comprend la détermination d'une réponse de canal unique d'une séquence de trames du signal de capteur de substitution (316) et du signal de microphone à conduction aérienne (318).

13. Support lisible par ordinateur conformément à la revendication 11, dans lequel la réponse de canal comprend une réponse de canal à un signal de parole propre.

14. Support lisible par ordinateur conformément à la revendication 13 comprenant en outre la détermination d'une réponse de canal à un signal de parole de fond (312).

**15.** Support lisible par ordinateur conformément à la revendication 14 comprenant en outre l'utilisation de la réponse de canal au signal de parole de fond (312) avec la réponse de canal au signal de parole propre (302) pour estimer la valeur de parole propre.

**16.** Support lisible par ordinateur conformément à la revendication 11 comprenant en outre l'utilisation de la valeur de parole propre pour estimer une valeur de parole de fond.

**17.** Procédé d'identification d'un signal de parole propre (302), procédé comprenant :

une estimation de paramètres de bruit qui décrivent un bruit dans un signal de capteur de substitution (316) provenant d'un capteur de substitution (306) autre qu'un microphone à conduction aérienne (304) ; et l'utilisation des paramètres de bruit pour estimer une réponse de canal d'un capteur de substitution ; et l'utilisation de la réponse de canal pour estimer une valeur d'un signal de parole propre (302).

**18.** Procédé conformément à la revendication 17, dans lequel l'estimation de paramètres de bruit comprend l'utilisation du signal de capteur de substitution (316) pour identifier des périodes pendant lesquelles un utilisateur ne parle pas et une parole de fond n'est pas présente.

**19.** Procédé conformément à la revendication 18 comprenant en outre la réalisation d'une détection de parole sur des parties d'un signal de microphone à conduction aérienne (318) associées aux périodes pendant lesquelles l'utilisateur ne parle pas pour identifier des périodes d'absence de parole et des périodes de parole de fond.

**20.** Procédé conformément à la revendication 19 comprenant en outre l'utilisation de parties du signal de capteur de substitution (316) associées aux périodes d'absence de parole pour estimer les paramètres de bruit.

**21.** Procédé conformément à la revendication 20 comprenant en outre l'utilisation des périodes d'absence de parole pour estimer des paramètres de bruit qui décrivent un bruit pour le signal de microphone à conduction aérienne.

**22.** Procédé conformément à la revendication 20 comprenant en outre l'utilisation des parties du signal de capteur de substitution (316) associées aux périodes de parole de fond pour estimer une réponse de canal à la parole de fond (312).

**23.** Procédé conformément à la revendication 22 comprenant en outre l'utilisation de la réponse de canal à la parole de fond (312) pour estimer une parole propre (302).

**24.** Procédé conformément à la revendication 17 comprenant en outre la détermination d'une estimation d'une valeur de parole de fond.

**25.** Procédé conformément à la revendication 24, dans lequel la détermination d'une estimation d'une valeur de parole de fond comprend l'utilisation de l'estimation de la valeur de parole propre pour estimer la valeur de parole de fond.

**26.** Procédé conformément à la revendication 17 comprenant en outre l'utilisation d'un modèle précédent de la réponse de canal pour estimer la valeur de parole propre.

FIG. 1

200

202

PROCESSO
R

210

MEMOR
Y

O
S

212

APP(S)

204

214

OBJEC
T
STORE

216

206

I/O

208

COMMUNICATIO
N
INTERFAC
E

FIG. 2

FIG. 3

FIG. 4

500 → COLLECT AIR CONDUCTION
MICROPHONE AND ALTERNATIVE SENOR
VALUES FOR UTTERANCE

502 → DETERMINE VARIANCE FOR MICROPHONE
NOISE AND ALTERNATIVE SENSOR NOISE

504 → DETERMINE ESTIMATE OF H ACROSS ALL
FRAMES

506 → USE H TO ESTIMATE SEPARATE $X_t$ AT
EACH FRAME

# FIG. 5

600 — IDENTIFY FRAMES WHERE USER IS NOT SPEAKING AND THERE IS NO BACKGROUND SPEECH AND USE THESE FRAMES TO DETERMINE MICROPHONE NOISE AND ALTERNATIVE SENSOR NOISE

602 — IDENTIFY FRAMES WHERE USER IS NOT SPEAKING BUT THERE IS BACKGROUND SPEECH TO DETERMINE VARIANCE FOR BACKGROUND SPEECH

604 — USE FRAMES WHERE USER IS NOT SPEAKING BUT THERE IS BACKGROUND SPEECH TO ESTIMATE ALTERNATIVE SENSOR CHANNEL RESPONSE G TO BACKGROUND SPEECH

606 — USE G TO ESTIMATE H ACROSS ALL FRAMES

608 — DETERMINE $X_t$ FOR ALL FRAMES

610 — DETERMINE $V_t$ FOR ALL FRAMES

FIG. 6

700 — DETERMINE PARAMETERS $H_0$, $\sigma_H^2$ OF PRIOR MODEL OF CHANNEL RESPONSE

702 — DETERMINE ESTIMATE OF $X_t$

704 — USE $X_t$ AND $H_0$ TO DETERMINE $H_t$

706 — USE $H_t$ TO UPDATE $X_t$

708 — MORE ITERATIONS?

YES

NO

710 — END

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02098169 A1

**Non-patent literature cited in the description**

- **Yanli Zheng et al.** Air- and Bone-Conductive Integrated Microphones for Robust Speech Detection and Enhancement. *Automatic Speech Recognition and Understanding,* 30 November 2003, 249-254